# DEMANDE DE BREVET EUROPEEN

(11) **EP 2 990 618 A1**
(43) Date de publication de la demande: **02.03.2016**
(21) Numéro de dépôt: 15182050.3
(22) Date de dépôt: 21.08.2015
(51) Int. Cl.: F01K 9/00, F01K 13/00

(54) **DISPOSITIF DE COGÉNÉRATION**

(30) Priorité: 25.08.2014 FR 1457963; 25.09.2014 FR 1459082
(71) Demandeur: Soten, 44000 Nantes (FR)
(72) Inventeur: HAFFNER, Philippe, 51300 FRIGNICOURT (FR); HAFFNER, Marc, 44300 NANTES (FR); FERNANDEZ DE GRADO, Alain, 51300 LES RIVIERES HENRUEL (FR)
(74) Mandataire: Rhein, Alain

(57) **Abrégé**

L'invention concerne un dispositif de cogénération comportant un circuit principal (1a) comprenant :
- des moyens de chauffage (4) d'un fluide principal (5);
- une turbine à vapeur (9);
- en sortie de ladite turbine (9), des moyens d'échanges thermiques (11), avec un fluide extérieur (12), libérant en sortie des condensats (14);
- un collecteur (15) de préchauffage et de dégazage desdits condensats (14);
- des moyens de compression (16) desdits condensats (14) en des condensats pressurisés (17) dit fluide principal liquide (17) remis en pression;
- en sortie desdits moyens de compression (16), lesdits moyens de chauffage (4) du fluide principal (5) approvisionnés en condensats pressurisés (17);

caractérisé par le fait que ledit dispositif (1) comporte au moins un moyen auxiliaire d'apport calorique (19) et/ou auxdits condensats (14) et/ou auxdits condensats pressurisés (17) et/ou audit comburant (18).

## Description

La présente invention entre dans le domaine de la production simultanée d'énergies, à savoir la cogénération d'énergies thermique et électrique.

L'invention concerne particulièrement un dispositif de cogénération, mais également un procédé de génération d'énergie thermique et électrique utilisant ledit dispositif.

On notera qu'il existe déjà des dispositifs de cogénération produisant de l'énergie thermique et de l'énergie électrique en valorisant énergiquement de la matière première, par exemple de la biomasse.

De manière générale, les dispositifs de cogénération connus présentent des équipements complexes de type chaudière à vapeur reliée à une turbine à vapeur, elle-même connectée à un condenseur et une ou plusieurs pompes de circulation et de pressurisation, le tout formant un circuit fermé permettant communément de mettre en oeuvre le cycle de Rankine assurant la transformation de l'énergie issue de la matière première.

Ces dispositifs présentent comme inconvénient d'être peu flexibles dans leur fonctionnement car ils reposent sur la production de vapeur avec des caractéristiques relativement fixes. Notamment, ces dispositifs utilisent une turbine et/ou une chaudière à vapeur dont la plage de fonctionnement est à la fois étroite et déterminée dès sa conception, notamment par un seuil de puissance nominale de fonctionnement. Ceci pose problème lorsque le besoin en production d'énergie est réduit, très variable, et lorsque la matière première est de faible qualité énergétique ou disponible en quantité insuffisante.

En conséquence, par manque de possibilité d'ajustement, les dispositifs connus peuvent engendrer une surconsommation, donc une perte d'énergie primaire par rapport à la demande réelle de chaleur et/ou d'électricité.

D'autre part la production obtenue est double, à la fois thermique et électrique, et interdépendante: chaque production est dépendante de l'autre et en général une installation est conçue en fonction du besoin de chaleur nominal qui pourra être consommé. S'il est associé à une fonction de chauffage, ce besoin de chaleur varie au cours de l'année selon le climat du moment. S'il est associé à une fonction de procédé industriel, ce besoin de chaleur est fixé par ce procédé. Ainsi la production d'énergie électrique sera la conséquence de ce besoin de chaleur et de la conception de l'installation.

Avec les dispositifs de cogénération connus, il est rarement possible d'assurer une production d'énergie électrique défini et régulée librement indépendamment de la production de chaleur.

De plus, le dimensionnement du dispositif se fait en prenant un besoin de chaleur optimal moyen, qui est lui-même souvent très différent des besoins de chaleurs minimum et maximum.

L'ensemble de ces inconvénients, en particulier le manque d'ajustement du dispositif lors de son fonctionnement, impacte le rendement moyen global des dispositifs de cogénération connus et engendre souvent des pertes inutiles de l'énergie produite. Cela implique que des unités dédiées exclusivement à la production d'énergie thermique ou bien d'énergie électrique, sont souvent préférées à une unité de cogénération, malgré un rendement théorique largement à l'avantage de l'unité de cogénération.

La présente invention a pour but de pallier les inconvénients de l'état de la technique, en proposant un dispositif de cogénération capable de produire de l'énergie électrique et thermique avec un rendement amélioré, les deux productions étant ajustables et réglables indépendamment l'une de l'autre selon les demandes réelles de ces deux énergies.

Ainsi, la présente invention concerne un dispositif de cogénération d'énergies thermique et électrique comportant un circuit primaire fermé, dans lequel circule un fluide primaire, ledit dispositif 1 comprenant :
- des moyens de chauffage d'un fluide, alimentés par un combustible et un comburant pour la production de vapeur chauffée;
- ladite vapeur chauffée alimentant en sortie desdits moyens de chauffage, une turbine à vapeur, ladite turbine activant un équipement mécanique ou un générateur électrique;
- en sortie de ladite turbine, des moyens d'échanges thermiques avec un fluide extérieur circulant dans un réseau extérieur, lesdits moyens d'échanges thermiques libérant en sortie des condensats;
- en sortie desdits moyens d'échanges thermiques, un collecteur de préchauffage et de dégazage desdits condensats;
- en sortie dudit collecteur, des moyens de compression desdits condensats en des condensats pressurisés;
- en sortie desdits moyens de compression, lesdits condensats pressurisés alimentant lesdits moyens de chauffage;
caractérisé par le fait que ledit dispositif comporte au moins un moyen auxiliaire d'apport calorique auxdits condensats et/ou auxdits condensats pressurisés et/ou audit comburant.

Selon d'autres caractéristiques de l'invention :
- le moyen auxiliaire d'apport calorique, dans lequel circule un fluide auxiliaire (20), consiste en une ou plusieurs chaudières à eau distinctes(s) et extérieurs au circuit primaire dudit dispositif ;
- les moyens auxiliaires d'apport calorique alimentent en énergie calorique issue dudit fluide auxiliaire, le fluide primaire du circuit primaire ;
- lesdits moyens auxiliaires d'apport calorique sont conçus pour approvisionner en énergie calorifique lesdits moyens de chauffage et/ou lesdits moyens d'échanges thermiques et/ou ledit collecteur de dégazage et de stockage ;
- ledit fluide extérieur est confondu avec ledit fluide auxiliaire ;
- lesdits moyens auxiliaires d'apport calorique comprennent des moyens d'élévation en température et de réchauffement fluide et/ou des condensats pressurisés et/ou des condensats et/ou du fluide extérieur et/ou du combustible et/ou du comburant.

La présente invention concerne également un procédé de génération d'énergie thermique et électrique dans lequel:
- on alimente des moyens de chauffage d'un fluide en comburant et en combustible pour la production de vapeur chauffée,
- on approvisionne une turbine à vapeur avec ladite vapeur chauffée, pour produire de l'énergie électrique ou un travail mécanique et de la vapeur en détente,
- on alimente, avec ladite vapeur en détente, des moyens d'échanges thermiques qui libèrent des condensats, pour produire de l'énergie thermique,
- on alimente en énergie thermique un fluide extérieur,
- on collecte lesdits condensats puis on les compresse pour les transformer en des condensats pressurisés;
- on alimente en condensats pressurisés remis en pression lesdits moyens de chauffage,
caractérisé en ce qu'il consiste à chauffer par l'intermédiaire d'au moins un moyen auxiliaire d'apport calorique extérieurs au circuit, lesdits condensats pressurisés et/ou lesdits condensats et/ou ledit comburant.

L'avantage de l'invention consiste en ce que, les moyens de chauffage, destinés à produire la vapeur chauffée ainsi que la turbine alimentés par ladite vapeur chauffée, sont dimensionnés pour un besoin d'énergie thermique moyen et non pas maximal, tel que c'est généralement le cas. En cas d'augmentation du besoin, notamment en énergie électrique, le fluide primaire circulant dans le circuit primaire, notamment dans une chaudière à vapeur, est en partie chauffé par un fluide auxiliaire secondaire liquide. Ce dernier est lui-même chauffé par un moyen de chauffage auxiliaire indépendant du circuit primaire donc de ladite chaudière à vapeur. Le fluide primaire et le fluide auxiliaire ne se mélangent pas entre eux. Ces deux fluides s'échangent uniquement de l'énergie calorique qui est transmise depuis le fluide auxiliaire vers le fluide primaire. Cela permet donc d'augmenter les apports caloriques en supplément de ladite chaudière à vapeur à sa pleine capacité. Cette augmentation permet au dispositif de cogénération dans sa globalité de produire plus d'énergie thermique et électrique que ladite chaudière à vapeur seule.

Ainsi, le dispositif de cogénération de l'invention aura une plage de fonctionnement beaucoup plus large, permettant de ce fait de limiter les pertes d'énergie primaire, et donc l'augmentation du rendement moyen.

Selon l'invention, les moyens de chauffage destinés à chauffer le fluide auxiliaire secondaire pourront être alimentés par un combustible moins restrictif que les combustibles imposés par ladite chaudière à vapeur haute pression du circuit primaire.

Il en résulte pour le dispositif de l'invention une plus grande flexibilité des approvisionnements en énergie primaire, un moindre coût, ou encore une plus grande diversité des approvisionnements.

De plus, selon d'autres caractéristiques, ladite chaudière à vapeur est elle-même assistée par le chauffage du comburant par ledit fluide auxiliaire secondaire. Cela permet notamment d'augmenter la température des échanges thermiques, et donc la température de surchauffe de la vapeur.

Associée à une augmentation de la pression des condensats pressurisés générés par les moyens de compressions du fluide primaire selon la description qui va suivre, cette augmentation de la température de surchauffe va permettre d'augmenter la puissance de la turbine à vapeur, et donc la production d'énergie électrique.

Le dispositif de l'invention permet ainsi de faciliter la régulation de la puissance de production de chacune des énergies car il est possible de privilégier l'un ou l'autre des sources d'énergie principale ou auxiliaire selon le besoin du procédé.

D'autres caractéristiques et avantages de l'invention ressortiront de la description détaillée qui va suivre des modes de réalisation non limitatifs de l'invention, en référence aux figures annexées, dans lesquelles :

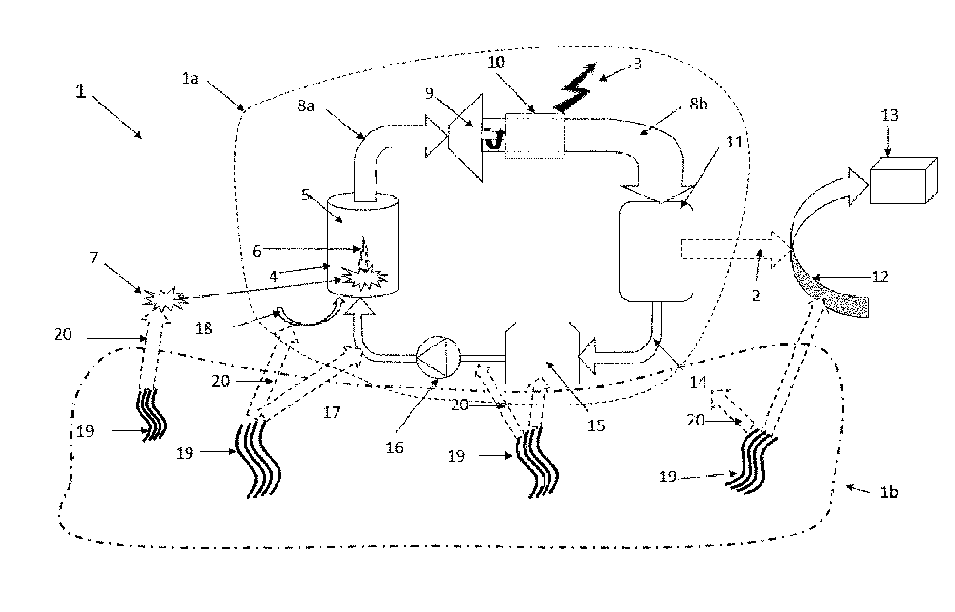

- la figure 1 représente schématiquement le dispositif 1 de cogénération selon l'invention et son principe de fonctionnement.

La présente invention concerne un dispositif 1 de cogénération d'énergies thermique 2 et électrique 3. Ce dispositif 1 se base sur le principe de cogénération, c'est-à-dire sur la production simultanée de deux énergies différentes, à savoir l'énergie thermique 2 et l'énergie électrique 3, dans un même processus.

L'énergie électrique 3 produite est issue d'un travail mécanique qui se produit au sein du dispositif 1. Néanmoins, ce travail mécanique peut également être utilisé pour produire autre chose que de l'énergie électrique 3, ou pour alimenter un autre dispositif en travail mécanique.

Le dispositif 1 de l'invention est constitué d'un circuit primaire 1a et d'un circuit secondaire auxiliaire 1b, de préférence le circuit primaire principal 1a est fermé. On entend par le terme « circuit primaire fermé » un circuit dans lequel circule un fluide qui ne fait l'objet d'aucun détournement ou prélèvement vers des machines extérieures ou vers d'autres usages que la mise en oeuvre du cycle de Rankine. En d'autres termes, le circuit principal 1a étant fermé aucun apport de fluide supplémentaire ne peut être fait au circuit 1a.

Ces deux circuits distincts permettent la production d'énergie électrique 3 et la production d'énergie thermique 2.

De préférence, le circuit primaire 1a met en oeuvre le cycle de Rankine, qui est un cycle thermodynamique endoréversible, composé d'une compression isentropique, suivi d'une vaporisation isobare, d'une détente isentropique, d'une condensation isobare. Ce cycle permet la production d'énergie électrique 3 et la production d'énergie thermique 2 à partir d'un fluide primaire.

Avantageusement, ledit fluide primaire consiste en de l'eau circulant, au sein du circuit 1a, sous différentes formes, par exemple sous forme de phase vapeur seule, de phase liquide seule ou de phase mixte vapeur et liquide.

Cependant de manière alternative, l'eau peut être remplacée par un fluide organique, mettant en oeuvre le même cycle.

Le circuit primaire 1a étant, de préférence fermé, le fluide primaire y circulant ne se mélange pas avec un autre fluide provenant d'une source extérieure au circuit primaire 1a.

Selon l'invention, le dispositif 1 comprend des moyens de chauffage 4 du fluide primaire, plus particulièrement d'un fluide 5.

On entend par « fluide 5», le fluide primaire présent au sein des moyens de chauffage 4 et qui va servir de base pour alimenter tout le circuit 1a.

De préférence, ledit fluide 5 est sous forme alternativement de liquide et de vapeur.

Avantageusement, le fluide 5 consiste en de l'eau.

Selon un mode de réalisation particulier, ledit fluide 5 récupère de l'énergie thermique 6 provenant d'un combustible 7.

Avantageusement ce combustible 7 consiste en de la biomasse valorisable énergiquement présent au sein desdits moyens de chauffage 4.

Il est à noter que la qualité de la matière première biomasse est très variable selon le taux d'humidité, la capacité calorifique, la température de fusibilité des cendres, le taux de cendres, de souffre, de chlore et de phosphate, mais elle permet dans tous les cas de fournir de l'énergie thermique 6 au fluide 5 présent au sein des moyens de chauffage 4.

En d'autres termes, ledit fluide 5 représente le fluide primaire qui est présent au sein des moyens de chauffage 4.

Ces derniers consistent avantageusement en une ou plusieurs chaudières à vapeur alimentée(s) par une source d'énergie carburante, plus particulièrement une source d'énergie par combustion, notamment de la biomasse. Ces moyens de chauffage 4 vont permettre d'apporter de l'énergie calorique au fluide 5.

Lorsque les moyens de chauffage 4 sont constitués par une chaudière à vapeur, alimentée par un combustible 7 constituée par de la biomasse, cette chaudière sera également alimentée par un comburant 18 extérieur au circuit 1a du dispositif 1.

Plus particulièrement, ce comburant 18 consiste en de l'air extérieur. Pour que la biomasse brûle, ledit comburant 18 est nécessaire.

Lesdits moyens de chauffage 4 permettent un réchauffement du fluide 5, pour obtenir un fluide chauffé générateur de vapeur 8a chauffée. Ladite vapeur 8a est présente en sortie des moyens de chauffage 4.

De préférence, les moyens de chauffage 4 consistent en une seule chaudière à vapeur qui transforme ledit fluide 5, par exemple de l'eau sous pression, en vapeur 8a.

Ladite vapeur 8a constitue donc le fluide primaire en sortie des moyens de chauffage 4.

De plus, en sortie desdits moyens de chauffage 4, ladite vapeur générée 8a va permettre l'approvisionnement d'une turbine à vapeur 9, cette dernière étant reliée en entrée auxdits moyen de chauffage 4.

Ladite turbine 9 alimentée par cette vapeur 8a en assure sa détente et son refroidissement.

En d'autres termes, en sortie de turbine 9, la vapeur en détente 8b consistera en une vapeur 8b présentant une température et une pression inférieure à celle de la vapeur 8a entrant dans la turbine 9.

Il est à noter que ladite vapeur 8b en détente constitue le fluide primaire en sortie de ladite turbine 9.

Selon l'invention, la turbine 9 va permettre de préférence l'activation d'un générateur électrique 10, lui-même connecté mécaniquement à la turbine 9. Ledit générateur électrique 10 va permettre la production d'énergie électrique 3.

De préférence, ledit générateur électrique 10 consiste en un alternateur en mode générateur.

Selon un autre mode de réalisation, la turbine 9 est connectée mécaniquement à des équipements non générateurs d'électricité qui assure l'utilisation directe du travail mécanique disponible, comme par exemple des pompes, des machines tournantes, des compresseurs.

De manière traditionnelle, au sein de la turbine 9, des points de prélèvement de vapeur appelés « points de soutirage » sont prévus afin de détourner une partie du flux de vapeur 8b avant sa détente complète. Ces points de soutirage sont donc une perte de capacité de travail mécanique de la vapeur 8b en détente.

La vapeur détournée présente de haute température, comme par exemple une température de 130°C.

Selon l'invention, ladite vapeur détournée peut être envoyée vers des dispositifs de préchauffage ultérieurs assurant par exemple un préchauffage du comburant 18 ou un préchauffage des condensats 14 et/ou des condensats pressurisés 17.

Au sein du circuit 1a du dispositif 1 de cogénération, la turbine 9 est reliée en sortie à des moyens d'échanges thermiques 11.

Plus précisément, lesdits moyens d'échanges thermiques 11 peuvent consister en un échangeur thermique couplé à un condenseur.

Le rôle de ces moyens d'échanges thermiques 11 est de produire de l'énergie thermique 2.

Le condenseur va permettre de transformer une partie de la vapeur en détente 8b, généralement soutirée depuis la turbine 9 au cours de la détente ou sortant de la turbine 9, en des condensats 14, ces derniers étant donc le fluide primaire revenu à l'état liquide.

Les condensats 14 constituent le fluide primaire en sortie des moyens d'échanges thermiques 11.

L'échangeur va permettre le transfert de l'énergie thermique 2, issue d'une partie de la vapeur en détente 8b.

Selon un mode de réalisation spécifique, une partie de l'énergie thermique 2 produite peut être destinée à produire du froid, le dispositif 1 permettant la production simultanée d'énergie thermique, d'énergie électrique ou mécanique, et d'énergie frigorifique.

Selon un mode de réalisation particulier, l'échangeur va permettre le transfert de l'énergie thermique 2 produite vers un fluide extérieur 12 au dispositif 1, sans qu'il y ait un mélange entre la vapeur en détente 8b et ledit fluide extérieur 12. En d'autres termes, le fluide primaire, c'est-à-dire la vapeur en détente 8b, ne se mélange pas avec le fluide extérieur, mais il apporte de l'énergie thermique 2 au fluide extérieur 12.

Plus particulièrement, ledit fluide extérieur 12 appartient à un réseau 13 qui est en dehors du circuit du dispositif 1, ledit réseau 13 pouvant être relié au circuit 1a du dispositif 1 par l'intermédiaire dudit fluide extérieur 12.

En d'autres termes, lesdits moyens d'échanges thermiques 11 peuvent être connectés, en alimentation en énergie thermique, à un fluide extérieur 12, ce dernier alimentant un réseau 13. Dans ce cas, l'unique échange entre le fluide primaire et le fluide extérieur 12 consiste à échanger de l'énergie thermique, ces deux fluides ne se mélangent pas.

Selon un premier mode de réalisation, ledit réseau 13 est un réseau de chaleur et consiste par exemple en un réseau de consommation de chaleur urbain ou industrielle.

Selon un autre mode de réalisation, lesdits moyens d'échanges thermiques 11 sont simplement connectés à un réseau extérieur 13 qui consiste en de l'atmosphère ou en un réseau d'eaux environnementales, comme par exemple une rivière ou un fleuve. Dans ce cas, l'énergie thermique 2 produite est dissipée dans l'atmosphère ou dans un réseau d'eaux environnementales, ce qui constitue une non valorisation d'une fraction de l'énergie primaire.

En outre, lesdits moyens d'échanges thermiques 11 libèrent en sortie des condensats 14. Ces derniers approvisionnent en entrée un collecteur 15 de condensats 14 pour assurer leur préchauffage et leur dégazage.

En d'autres termes, en sortie des moyens d'échanges thermiques 11, un collecteur 15 est présent pour réceptionner les condensats 14.

Plus précisément, ledit collecteur 15 permet de préchauffer et de dégazer les condensats 14 qui proviennent des moyens d'échanges thermiques 11.

Selon un mode de réalisation particulier, le dispositif 1 présente plusieurs collecteurs 15 en série connectés entre eux.

Le dispositif 1 de l'invention comprend en outre, en sortie du collecteur 15, des moyens de compression 16 desdits condensats 14 en des condensats pressurisés 17.

En d'autres termes, les condensats pressurisés 17 constituent le fluide primaire en sortie des moyens de compressions 16.

Ces moyens de compressions 16 permettent de pressuriser les condensats 14 en condensats pressurisés 17 sous forme de phase liquide. De préférence, ces moyens de compression 16 consistent en une ou plusieurs pompes de compression.

En d'autres termes, lesdits moyens de compressions 16 sont connectés en sortie du collecteur 15 et permettent de compresser les condensats 14 collectés et d'en faire un fluide primaire liquide remis en pression.

Lesdits moyens de compression 16 sont reliés en sortie auxdits moyens de chauffage 4 et permettent leur approvisionnement en condensats pressurisés liquide 17 remis en pression.

En d'autres termes, les condensats pressurisés 17 remis en pression peuvent constituer une source de fluide 5 et alimenter directement les moyens de chauffage 4.

Ainsi, selon l'invention le fluide primaire circulant au sein du circuit primaire 1a fermé consiste en le fluide 5, la vapeur chauffée 8a, la vapeur en détente 8b, les condensats 14, les condensats pressurisés 17.

Selon une particularité de l'invention, ledit dispositif 1 comporte au moins un moyen auxiliaire d'apport calorique 19 audit fluide primaire circulant au sein dudit circuit 1a.

Avantageusement lesdits moyens auxiliaires d'apport calorique 19 sont extérieurs et en dehors du circuit primaire 1a et appartiennent à un circuit secondaire auxiliaire 1b. En d'autres termes, le moyen auxiliaire d'apport calorique 19 selon l'invention n'appartient pas au circuit primaire 1a.

Ledit circuit secondaire auxiliaire 1b est indépendant du circuit primaire 1a, aucun échange de fluide ne s'effectue entre ces deux circuits, seul un échange d'énergie thermique, c'est-à-dire un apport calorique s'effectue du circuit secondaire auxiliaire 1b vers le circuit primaire 1a. Le circuit primaire 1a va prélever de l'énergie thermique du circuit secondaire auxiliaire 1b, c'est-à-dire que le circuit auxiliaire 1b apporte de l'énergie thermique au circuit primaire 1a.

De préférence, ledit moyen auxiliaire d'apport calorique 19 consiste en au moins une chaudière à eau distincte et extérieure au circuit 1a dudit dispositif 1 de cogénération. Le fluide circulant au sein dudit moyen auxiliaire d'apport calorique 19 constitue le fluide auxiliaire 20. Ce dernier ne peut pas se mélanger avec le fluide primaire du circuit primaire 1a, car le circuit primaire 1a est fermé. Le fluide auxiliaire 20 a pour seul et unique rôle d'échanger de la chaleur, c'est-à-dire d'apporter de l'énergie calorique au fluide primaire.

Le fluide primaire est toujours séparé du fluide auxiliaire 20, ils ne se mélangent jamais physiquement mais travaillent en collaboration l'un avec l'autre en matière de transfert d'énergie thermique.

En d'autres termes, les moyens auxiliaires d'apport calorique 19 approvisionnent le fluide primaire, circulant au sein du circuit 1a en énergie calorique, plus spécifiquement en énergie thermique par le biais d'échangeurs de chaleur.

En alternative, le fluide auxiliaire 20 caloporteur dudit moyen auxiliaire d'apport calorique 19 peut être un fluide différent de l'eau, comme par exemple une huile thermique.

En outre, le fluide auxiliaire 20 approvisionne le fluide primaire en énergie calorique, plus spécifiquement en énergie thermique par le biais d'échangeurs de chaleur.

De plus, il est à noter que le fluide primaire circulant dans tous le circuit est constitué par le fluide 5, la vapeur 8a chauffée, la vapeur en détente 8b, les condensats 14, les condensats pressurisés 17.

Plus spécifiquement, les moyens auxiliaires d'apport calorique 19 alimentent en énergie calorique, issue du fluide auxiliaire 20, les condensats 14 et/ou les condensats pressurisés 17 et/ou le fluide 5.

Selon un mode de réalisation spécifique, ces moyens 19 alimentent également en énergie calorique, issu du fluide auxiliaire 20, le comburant 18 et/ou le fluide extérieur 12.

De préférence, les moyens d'apport calorique 19 approvisionnent en énergie calorique les condensats 14 et/ou les condensats pressurisés 17 et/ou le comburant 18, ceci sans qu'il y ait un mélange des différents fluides.

Selon un autre mode de réalisation spécifique, le fluide auxiliaire 20 est confondu avec ledit fluide extérieur 12. Dans ce cas, on limite les pertes d'énergie, en effet l'énergie thermique produite s'échappant du circuit primaire 1a est réutilisée pour être réinjectée dans ce même circuit 1a.

Ledit fluide primaire permet la production d'énergie thermique 2 et électrique 3, il circule à la fois au sein et entre les moyens de chauffage 4, la turbine à vapeur 9, les moyens d'échanges thermiques 11, le collecteur 15 et les moyens de compression 16.

De préférence, lesdits moyens auxiliaires d'apport calorique 19 comprennent des moyens d'élévation en température des condensats 14 en sortie desdits moyens d'échange thermique 11.

De préférence, l'élévation en température desdits condensats 14 par lesdits moyens auxiliaires d'apport calorique 19 est accompagnée par une augmentation de la pression desdits condensats 14.

De préférence, lesdits moyens auxiliaires 19 comprennent des moyens d'apport calorique audit fluide extérieur 12 en dehors dudit circuit 1a.

De préférence, lesdits moyens auxiliaires 19 comprennent des moyens d'élévation en température du fluide 5 présent au sein des moyens de chauffage 4.

De préférence, lesdits moyens auxiliaires 19 comprennent des moyens d'apport calorique auxdits condensats pressurisés 17.

Plus particulièrement, les moyens auxiliaires 19 comprennent des moyens d'élévation en température et de réchauffement du fluide 5 et/ou des condensats pressurisés 17 et/ou des condensats 14 et/ou du fluide extérieur 12.

Selon un autre mode de réalisation particulier de l'invention, lesdits moyens auxiliaires d'apport calorique 19 peuvent être conçus pour chauffer le comburant 18, ceci préalablement et/ou simultanément à son introduction dans les moyens de chauffage 4.

Selon un autre mode de réalisation particulier de l'invention, lesdits moyens auxiliaires d'apport calorique 19 peuvent être conçus pour monter en température le combustible 7, plus particulièrement la biomasse introduite au sein de la chaudière à vapeur.

Le chauffage préalable du comburant 18 et du combustible 7 permet d'augmenter le débit à laquelle on obtient de la vapeur 8a par rapport à une quantité de combustible 7 et de comburant 18 identique mais qui ne subirait pas de chauffage préalable.

En outre, pour une quantité de combustible 7 fixe, le chauffage préalable de ce dernier et/ou du comburant 18 permet d'améliorer le rendement et la quantité en vapeur 8a par rapport à une vapeur 8a obtenue à partir de la même quantité fixe de combustible 7 mais sans chauffage préalable.

Le chauffage préalable de comburant 18 et/ou de combustible 7 permet donc d'améliorer le rendement en énergie calorique pour une quantité donnée de combustible 7 au sein des moyens de chauffage 4 et une quantité donnée de comburant 18.

Selon un autre mode de réalisation particulier, lesdits moyens auxiliaires d'apport calorique 19 peuvent être conçus pour réduire le taux d'humidité et monter en température le combustible 7, plus particulièrement la biomasse présente au sein de la chaudière à vapeur.

Le séchage par chauffage du combustible 7 jouant le rôle de carburant permet d'améliorer et de stabiliser la combustion dans le foyer des moyens de chauffage 4. Ce séchage améliore et stabilise surtout la matière première qui peut présenter un pouvoir calorifique très variable, en particulier en fonction de son taux d'humidité.

En cas de séchage par de l'air, cet air chaud et humide, permettant le chauffage et le séchage du combustible 7, peut être introduit dans le foyer des moyens de chauffage 4 pour améliorer la performance de la combustion.

En conséquence, le séchage par chauffage permettra de faire fluctuer plus facilement la production par rapport à la production nominale de l'équipement du dispositif de cogénération 1 de l'invention.

Plus particulièrement, les moyens auxiliaires 19 comprennent des moyens d'élévation en température et de réchauffement du fluide primaire, notamment du fluide 5 et/ou des condensats pressurisés 17 et/ou des condensats 14 et/ou du fluide extérieur 12, mais aussi du combustible 7 et/ou du comburant 18.

De manière spécifique, de tels moyens auxiliaires d'apport calorique 19 sont conçus pour approvisionner en énergie calorifique lesdits moyens de chauffage 4 et/ou lesdits moyens d'échanges thermiques 11 et/ou ledit collecteur 15 de dégazage et de stockage et/ou lesdits moyens de compressions 16.

Selon un mode de réalisation particulier, les moyens auxiliaires d'apport calorique 19 peuvent consister en une ou plusieurs chaudières à eau chaude alimentées par un combustible 7 de type biomasse spécifiquement conçu pour cet usage.

Selon un autre mode de réalisation, les moyens auxiliaires d'apport calorique 19 peuvent consister en une source de chaleur issue d'un procédé autre que le dispositif de cogénération 1 de l'invention. Ce mode de réalisation permet ainsi une valorisation, notamment à l'aide d'échangeur thermique, de cette énergie calorique externe, sous la forme d'un fluide chaud présentant une température supérieure à celle présente au sein des moyens de chauffage 4, au sein des moyens d'échanges thermiques 11 et au sein du collecteur 15.

Selon un mode de réalisation plus particulier, les moyens auxiliaires d'apport calorique 19 peuvent consister en une ou plusieurs pompes à chaleur.

En particulier, ces pompes à chaleur permettent de récupérer une énergie extérieure, issue d'un fluide à basse température et de faire remonter ce fluide en température, afin de permettre une transmission de l'énergie via un échangeur, au sein des moyens auxiliaire d'apport calorique 19.

Cette énergie extérieure peut être issue des fumées de l'installation du dispositif 1 de cogénération de l'invention ou d'une autre installation.

La présente invention concerne également un procédé de génération d'énergie thermique et électrique dans lequel :
- on alimente des moyens de chauffage 4 d'un fluide 5 en comburant 18 et en combustible 7 pour la production de vapeur 8a chauffée,
- on approvisionne une turbine à vapeur 9 avec ladite vapeur chauffée 8a, pour produire de l'énergie électrique 3 et de la vapeur en détente 8b,
- on alimente, avec ladite vapeur en détente 8b, des moyens d'échanges thermiques 11 qui libèrent des condensats 14, pour produire de l'énergie thermique 2,
- on alimente en énergie thermique 2 un fluide extérieur 12,
- on collecte lesdits condensats 14 puis on les compresse pour les transformer en condensats pressurisées 17,
- on alimente en condensats pressurisés 17 lesdits moyens de chauffage 4.

Selon une caractéristique particulière du procédé de l'invention, lesdits condensats 14 et/ou lesdits condensats pressurisés 17 et/ou ledit comburant 18, sont chauffés par l'intermédiaire d'au moins un moyen auxiliaire d'apport calorique 19 extérieurs au circuit primaire 1a.

Selon le procédé de l'invention, la collecte desdits condensats 14 comprend une étape de chauffage pour faciliter le dégazage. En d'autres termes, durant la collecte, on a une opération de dégazage, le dégazage est réalisé en particulier pour préserver les moyens de compressions 16, en particulier la pompe. Il est à noter que le préchauffage des condensats 14 facilite leur dégazage au sein du collecteur 15.

Selon une autre caractéristique du procédé, on préchauffe les condensats 14 et les condensats pressurisés 17 à l'aide de la vapeur détournée issue des points de soutirage de la turbine 9.

En outre, le préchauffage des condensats pressurisés 17 permet de réduire la consommation de combustible 7 au niveau des moyens de chauffage 4, notamment à la chaudière.

La présente invention présente plusieurs avantages techniques.

En particulier, l'apport auxiliaire d'énergie par les moyens auxiliaire d'apport calorique 19 permet de réduire ou de supprimer le soutirage de vapeur à la turbine 9 utilisé habituellement pour préchauffer le comburant 18 et ainsi d'augmenter la production de vapeur 8a et la production électrique.

De plus, l'apport auxiliaire d'énergie par les moyens auxiliaire d'apport calorique 19 a également pour avantage de réduire ou supprimer le soutirage utilisé habituellement pour préchauffer les condensats 14 vers 100°C et faciliter leur dégazage.

En outre, l'apport auxiliaire d'énergie par les moyens auxiliaire d'apport calorique 19 permet de réduire ou supprimer le soutirage utilisé habituellement pour préchauffer les condensats 14 et /ou les condensats pressurisés 17 par exemple vers 130°C ou même au-delà par exemple 240°C.

De plus, l'apport auxiliaire d'énergie par les moyens auxiliaire d'apport calorique 19 permet d'amener les condensats 17 à plus haute température dans les moyens de chauffage 4, par exemple à une température de 520°C. En conséquence, il y a production de vapeur 8a à plus haute valeur énergétique avec la même consommation de combustible 7. De ce fait, l'invention permet d'assurer la production d'une plus grande quantité de vapeur 8a qui permettra de produire plus d'énergie électrique ou thermique.

On améliore encore le dispositif 1 de l'invention en augmentant aussi la pression des condensats 14 et/ou 17, par exemple jusqu'à une pression supérieur ou égale à 120 bars.

L'apport auxiliaire d'énergie permet aussi de compléter la production de chaleur requise pour le réseau extérieur 13 si l'énergie 2 ne suffit pas à répondre à ses besoins. Ceci est par exemple avantageux quand la priorité est donnée à la production d'énergie électrique 3 au détriment de la température de la vapeur 8b. Les moyens auxiliaires d'apport calorique 19 ont pour avantage de permettre la régulation de la production thermique et mécanique électrique de façon indépendante.

## Revendications

1. Dispositif (1) de cogénération d'énergies thermique (2) et électrique (3) comportant un circuit primaire **(1a)** fermé, dans lequel circule un fluide primaire, ledit dispositif 1 comprenant :
- des moyens de chauffage (4) d'un fluide (5), alimentés par un combustible (7) et un comburant (18) pour la production de vapeur chauffée (8a);
- ladite vapeur chauffée (8a) alimentant en sortie desdits moyens de chauffage (4), une turbine à vapeur (9), ladite turbine (9) activant un équipement mécanique ou un générateur électrique (10);
- en sortie de ladite turbine (9), des moyens d'échanges thermiques (11) avec un fluide extérieur (12) circulant dans un réseau extérieur (13), lesdits moyens d'échanges thermiques (11) libérant en sortie des condensats (14);
- en sortie desdits moyens d'échanges thermiques (11), un collecteur (15) de préchauffage et de dégazage desdits condensats (14) ;
- en sortie dudit collecteur (15), des moyens de compression (16) desdits condensats (14) en des condensats pressurisés (17);
- en sortie desdits moyens de compression (16), lesdits condensats pressurisés (17) alimentant lesdits moyens de chauffage (4);
**caractérisé par le fait que** ledit dispositif (1) comporte au moins un moyen auxiliaire d'apport calorique (19) auxdits condensats (14) et/ou auxdits condensats pressurisés (17) et/ou audit comburant (18).

2. Dispositif (1) de cogénération d'énergies thermique (2) et électrique (3) selon la revendication précédente **caractérisé par le fait que** le moyen auxiliaire d'apport calorique (19), dans lequel circule un fluide auxiliaire (20), consiste en une ou plusieurs chaudières à eau distinctes(s) et extérieure(s) au circuit primaire (1a) dudit dispositif (1).

3. Dispositif (1) de cogénération d'énergies thermique (2) et électrique (3) selon la revendication précédente **caractérisé par le fait que** les moyens auxiliaires d'apport calorique (19) alimentent en énergie calorique issue dudit fluide auxiliaire (20), le fluide primaire du circuit primaire (1a).

4. Dispositif (1) de cogénération d'énergie thermique (2) et électrique (3) selon l'une quelconque des revendications précédentes **caractérisé par le fait que** lesdits moyens auxiliaires d'apport calorique (19) sont conçus pour approvisionner en énergie calorifique lesdits moyens de chauffage (4) et/ou lesdits moyens d'échanges thermiques (11) et/ou ledit collecteur (15) de dégazage et de stockage.

5. Dispositif (1) de cogénération d'énergie thermique (2) et électrique (3) selon la revendication 2 **caractérisé par le fait que** ledit fluide extérieur (12) est confondu avec ledit fluide auxiliaire (20).

6. Dispositif (1) de cogénération d'énergie thermique (2) et électrique (3) selon l'une quelconque des revendications précédentes **caractérisé par le fait que** lesdits moyens auxiliaires d'apport calorique (19) comprennent des moyens d'élévation en température et de réchauffement fluide (5) et/ou des condensats pressurisés (17) et/ou des condensats (14) et/ou du fluide extérieur (12) et/ou du combustible (7) et/ou du comburant (18).

7. Procédé de génération d'énergie thermique (2) et électrique (3) dans lequel:
- on alimente des moyens de chauffage (4) d'un fluide (5) en comburant (18) et en combustible (7) pour la production de vapeur (8a) chauffée,
- on approvisionne une turbine à vapeur (9) avec ladite vapeur chauffée (8a), pour produire de l'énergie électrique (3) ou un travail mécanique et de la vapeur en détente (8b),
- on alimente, avec ladite vapeur en détente (8b), des moyens d'échanges thermiques (11) qui libèrent des condensats (14), pour produire de l'énergie thermique (2),
- on alimente en énergie thermique (2) un fluide extérieur (12),
- on collecte lesdits condensats (14) puis on les compresse pour les transformer en des condensats pressurisés (17);
- on alimente en condensats pressurisés(17) remis en pression lesdits moyens de chauffage (4),
**caractérisé en ce qu'**il consiste à chauffer par l'intermédiaire d'au moins un moyen auxiliaire d'apport calorique (19) extérieur au circuit (1a), lesdits condensats pressurisés (17) et/ou lesdits condensats (14) et/ou ledit comburant (18).
